# EUROPÄISCHE PATENTANMELDUNG

(11) **EP 3 578 938 A1**
(43) Veröffentlichungstag der Anmeldung: **11.12.2019**
(21) Anmeldenummer: 19176318.4
(22) Anmeldetag: 23.05.2019
(51) Int. Cl.: G01J 3/02, G01J 3/18, G01J 3/22, G01J 3/443

(54) **SPEKTROMETERANORDNUNG**

(30) Priorität: 04.06.2018 DE 102018113235
(71) Anmelder: Analytik Jena AG, 07745 Jena (DE)
(72) Erfinder: Münch, Stefan, 10711 Berlin (DE); Okruss, Michael, 14482 Potsdam (DE)
(74) Vertreter: Andres, Angelika Maria

(57) **Zusammenfassung**

Die Erfindung offenbart eine Spektrometeranordnung (10), umfassend: ein erstes dispergierendes Element (31) zur spektralen Zerlegung von Strahlung in einer Hauptdispersionsrichtung; ein zweites dispergierendes Element (21) zur spektralen Zerlegung von Strahlung in einer Querdispersionsrichtung, welche einen Winkel zur Hauptdispersionsrichtung bildet, sodass ein zweidimensionales Spektrum erzeugbar ist; eine Kollimationsoptik (17), welche die Strahlung kollimiert zum ersten und/oder zweiten dispergierenden Element (31, 21) führt; eine Kameraoptik (34), welche das Spektrum in eine Bildebene (41) abbildet; ein zweidimensionaler Detektor (39) zur Detektion des zweidimensionalen Spektrums in der Bildebene (41); und ein außeraxialer Ausschnitt eines rotationssymmetrischen refraktiven Elements (35), das zwischen Kameraoptik (34) und Detektor (39) angeordnet ist.

Die Erfindung offenbart ebenfalls eine optische Bauteilegruppe umfassend eine solche Spektrometeranordnung (10).

## Beschreibung

Die Erfindung betrifft eine Spektrometeranordnung und eine optische Bauteilegruppe umfassend eine solche.

Ein Beispiel für eine solche Spektrometeranordnung ist ein Echelle-Spektrometer mit interner Ordnungstrennung. Das der Erfindung zugrundeliegende Problem soll im Folgenden anhand eines Echelle-Spektrometers erläutert werden.

Eine solche Spektrometeranordnung ist beispielsweise bekannt aus der DE 10 2009 059 280 A1.

Bei einem Echelle-Spektrometer werden Gitter mit einem treppenartigen Querschnitt verwendet. Durch die Beleuchtung der kurzen Fassette der stufenartigen Struktur mit einem entsprechenden Blaze-Winkel wird ein Beugungsmuster erzeugt, welches die gebeugte Intensität in hohen Ordnungen, z.B. in fünfzigster bis einhundertster Ordnung konzentriert. Dadurch können hohe spektrale Auflösungen bei kompakter Anordnung erreicht werden. Die Ordnungen können sich - je nach einfallenden Wellenlängen - überlagern. Die Ordnungen werden bei Echelle-Spektrometern mit interner Ordnungstrennung daher nochmals quer zur Dispersionsrichtung des Echelle-Gitters dispergiert, um die verschiedenen auftretenden Ordnungen zu trennen. Man erhält so ein zweidimensionales Spektrum, das mit Flächendetektoren erfasst werden kann.

Ein Echelle-Spektrometer mit interner Ordnungstrennung unterscheidet sich von Echelle-Spektrometern mit externer Ordnungstrennung dadurch, dass bei den letztgenannten nur Strahlung aus einem kleinen Spektralbereich in das Spektrometer eintritt. Bei Spektrometern mit interner Ordnungstrennung wird das Spektrum in Form einer zweidimensionalen Struktur in der Detektorebene erzeugt. Diese Struktur besteht aus im Wesentlichen parallel zueinander angeordneten, spektralen Abschnitten. Die freien Spektralbereiche der jeweiligen Beugungsordnungen ergeben zusammengesetzt ein lückenloses Spektrum für einen bestimmten Wellenlängenbereich. Die Verwendung eines Flächendetektors mit einer Vielzahl von Detektorelementen erlaubt die simultane Erfassung eines großen Wellenlängenbereichs mit hoher spektraler Auflösung.

Bei Spektrometeranordnungen wird die Güte des in der Bildfläche erzeugten Spektrums durch verschiedene Abbildungsfehler begrenzt, insbesondere durch Astigmatismus, Koma oder sphärische Aberration. Wird die Strahlung einer Wellenlänge bei der Abbildung eines Quellpunktes nicht in einem einzigen Bildpunkt auf dem Detektor konzentriert, sondern auf eine größere Fläche in der Bildebene verteilt, beeinträchtigt dies das spektrale Auflösungsvermögen des Spektrometers bei Verbreiterung des Bildpunktes in Dispersionsrichtung und/oder führt zu einem schlechteren Signal-Rausch-Verhältnis bei Verbreiterung des Bildpunktes quer zur Dispersionsrichtung. Im speziellen Fall eines Echelle-Spektrographen, bei dem mehrere Beugungsordnungen nebeneinander abgebildet werden, können Abbildungsfehler, die zu einer Verbreiterung des Bildpunktes quer zur Hauptdispersionsrichtung führen, ein Signalübersprechen zwischen benachbarten Beugungsordnungen bewirken.

Aufgabe der Erfindung ist die Verbesserung der Abbildungsgüte von optischen Spektrometern durch weitgehende Reduktion von optischen Abbildungsfehlern wie Astigmatismus, Koma oder sphärische Aberrationen.

Die Aufgabe wird gelöst durch eine Spektrometeranordnung, umfassend: ein erstes dispergierendes Element zur spektralen Zerlegung von Strahlung in einer Hauptdispersionsrichtung; ein zweites dispergierendes Element zur spektralen Zerlegung von Strahlung in einer Querdispersionsrichtung, welche einen Winkel zur Hauptdispersionsrichtung bildet, sodass ein zweidimensionales Spektrum erzeugbar ist; eine Kollimationsoptik, welche die Strahlung kollimiert zum ersten und/oder zweiten dispergierenden Element führt; eine Kameraoptik, welche das Spektrum in eine Bildebene abbildet; ein zweidimensionaler Detektor zur Detektion des zweidimensionalen Spektrums in der Bildebene; und ein außeraxialer Ausschnitt eines rotationssymmetrischen refraktiven Elements, das zwischen Kameraoptik und Detektor angeordnet ist.

In der Spektrometeranordnung wird die eintreffende Strahlung einer Lichtquelle dispergiert, d.h. durch zumindest das erste und/oder zweite dispergierende Element wellenlängenabhängig in verschiedene räumliche Richtungen gelenkt. Durch Abbildung der getrennten Strahlungsbündel mithilfe der Kameraoptik wird in einer Bildebene ein Bild des Spektrums der Lichtquelle erzeugt, welches von dem Detektor mit hinreichender räumlicher Auflösung registriert wird.

Durch das Einfügen eines außeraxialen Ausschnitts eines rotationssymmetrischen refraktiven Elements in den konvergenten Strahlengang zwischen Kameraoptik und Detektor, wird eine erhebliche Verringerung der oben genannten Abbildungsfehler über das ganze Bildfeld erzielt.

Die Anordnung des refraktiven Elements zwischen Kameraoptik und Detektor ist besonders effektiv, da die einzelnen Bündel bereits relativ stark geometrisch getrennt sind uns somit eine "individuellere" Anpassung für die einzelnen Wellenlängen bewirkt wird. Das refraktive Element kann entsprechend besser den einzelnen Korrekturanforderungen der Bündel angepasst werden. Dies ist möglich durch eine geringe relative Bündelüberlappung (siehe unten). Wäre ein entsprechendes refraktives Element bei einem parallelen Strahlenverlauf eingefügt, würde dieses auf alle Wellenlänge in ähnlicher Art wirken und eine Korrektur würde sich entsprechend ähnlich auf alle Wellenlängen auswirken. Die Anordnung des refraktiven Elements als optisches Korrekturelement vor dem Detektor, erlaubt eine sehr kompakte Bauweise, da sich an dem Ort der Durchmesser der Bündelschar sämtlicher detektierter Wellenlängen schon stark eingeengt hat.

Die einzelnen Bündel verlaufen nach der Kameraoptik zum refraktiven Element im Wesentlichen parallel. Durch die Ausgestaltung des refraktiven Elements als Sammellinse, und insbesondere bei der Ausgestaltung als bikonvexe Linse, werden die einzelnen Bündel auf dem Detektor näher zusammengeschoben. Das Spektrum auf dem Detektor wird dadurch etwas kleiner oder in anderen Worten wird der Messbereich erweitert.

Die einzelnen Strahlen innerhalb jedes Bündels laufen hingegen definierter auf einzelne Punkte auf dem Detektor zu. Die Strahlen innerhalb jedes Bündels werden durch die Kameraoptik auf den Detektor bzw. auf die Bildebene fokussiert. Die vielen Strahlen einer Wellenlänge laufen zusammen und treffen sich durch das refraktive Element somit besser in einem einzelnen Punkt. Anders ausgedrückt, werden die Spotbilder für die einzelnen Wellenlängen kleiner, bzw. die Point Spread Function (PSF) wird schmaler.

Die relative Bündelüberlappung ist eine prozentuale Größe und kann explizit für zwei Wellenlängen berechnet werden. Die relative Bündelüberlappung an einem bestimmten Ort im Strahlengang in der Spektrometeranordnung ist das reziproke arithmetische Verhältnis zwischen der Bündelquerschnittsfläche eines ausgesuchten monochromatischen Bündels an diesem Ort und der Teilfläche davon, welche gleichfalls von einem zweiten monochromatischen Bündel überspannt wird. Das refraktive Element ist an einer Stelle angeordnet, wo die relative Bündelüberlappung kleiner ist als auf der Kollimationsoptik. Die relative Bündelüberlappung erfüllt diese Bedingung nur zwischen Kameraoptik und Detektor und im konvergenten und divergenten Strahlengang im Bereich einer Zwischenabbildung. Sie erfüllt diese Bedingung aber nicht im parallelen Strahlengang, etwa im Strahlenverlauf vor einem dispergierenden Element. ist das refraktive Element als Prisma ausgestaltet.

Der Begriff eines "außeraxialer Ausschnitts eines rotationssymmetrischen refraktiven Elements" soll ebenfalls das partielle Durchleuchten eines rotationssymmetrischen refraktiven Elements außerhalb seiner Achse umfassen.

In einer Ausgestaltung ist das das refraktive Element als bikonvexe Linse ausgestaltet.

In einer Ausgestaltung ist die Linse als sphärische Linse ausgestaltet.

Die Achse der Linse ist definiert als Gerade, welche mit beiden optischen Flächen am Durchstoßpunkt einen rechten Winkel bildet. Ein außeraxialer Ausschnitt eines solchen rotationssymmetrischen Elements ist ein Volumenausschnitt, welcher nicht zentral von der Achse durchstoßen wird. Das Element ist Ausschnitt eines rotationssymmetrischen Körpers, ist aber für sich selber nicht rotationssymmetrisch.

Um die Performance des refraktiven Elements noch weiter zu erhöhen, wird in einer Ausgestaltung eine nicht-sphärische Linse verwendet.

Bei refraktiven optischen Elementen kann es zu Fresnel-Reflexionen kommen. Dadurch entstehende ungewollte Mehrfachreflexionen (Falschlicht). In einer Ausgestaltung umfasst das refraktive Element deswegen eine Breitbandverspiegelung.

Im Falle eines Messsystems, bei welchem der erfasste Wellenlängenbereich variiert werden kann, wird zur Verringerung chromatischer Aberrationen als Material des refraktiven Elements ein gering dispergierendes Material verwendet, in einer Ausgestaltung etwa Calciumfluorid (CaF₂).

Die Bestimmung der optimalen Ausformung (Krümmungsradien, Off-Axis-Distanz, Linsendicke, Linsenmaterial, Ausrichtung, Lage relativ zur Kameraoptik, Lage relativ zum Detektor, Linsenverdrehung) des refraktiven Elements wird in einer Ausgestaltung unter Verwendung von Strahlrechnungsprogrammen erfolgen. Durch Formulierung einer geeigneten Zielfunktion (Merit Funktion) und nachfolgender Anwendung von Optimierungsalgorithmen auf das Optikdesign entsprechend der Zielfunktion können Parameter gefunden werden, dank welchen die Bildpunktgrößen über die gesamte Bildfläche minimiert werden. Auch die gleichzeitige Verbesserung weiterer Gerätecharakteristika kann durch Formulierung einer geeigneten Merit-Funktion und nachfolgende Optimierung den freigegebenen Parametern erfolgen.

Wie erwähnt ist die Lage des refraktiven Elements vor dem Detektor günstig, weil die Trennung der Strahlbündel der einzelnen Wellenlängen bereits stark fortgeschrittenen (ist die relative Bündelüberlappung ist gering) und so spezifischer auf die einzelnen Bündel eingewirkt werden kann. Selbst der verhältnismäßig kleine Satz an freien Parametern bei einer sphärischen Linse, erlaubt es die verschiedenen Korrekturanforderungen der unterschiedlichen Wellenlängen wirkungsvoll zu adressieren.

In einer Ausgestaltung umfasst die Kollimationsoptik und/oder die Kameraoptik einen Hohlspiegel, insbesondere einen Parabolspiegel oder einen sphärischen Spiegel.

In einer Ausgestaltung ist das erste dispergierende Element als Echellegitter ausgestaltet.

In einer Ausgestaltung wird das erste dispergierende Element mit einem senkrecht zur Bildebene des Detektors angeordnetem Spiegel ersetzt, und wobei der zweidimensionale Detektor durch einen eindimensionalen Detektor ersetzt wird. Dadurch ergibt sich ein Prismenspektrograph.

In einer Ausgestaltung ist das zweite dispergierende Element als Prisma ausgestaltet.

In einer Ausgestaltung ist das das Prisma rückseitenverspiegelt.

In einer Ausgestaltung ist das Prisma drehbar gelagert. Dadurch kann der zu untersuchende Wellenlängenbereich eingestellt werden.

In einer Ausgestaltung bildet die Spektrometeranordnung ein Littrow-Spektrometer. Damit bildet der Kollimator auch gleichzeitig den Kameraspiegel, welcher die Abbildung auf den Detektor abbildet.

In einer Ausgestaltung ist der Detektor als CCD-Array oder ein CMOS-Detektor ausgestaltet.

Die Aufgabe wird weiter gelöst durch eine optische Bauteilegruppe zum Nachrüsten einer Spektrometeranordnung wie obenstehend beschrieben, wobei die Bauteilegruppe zumindest das refraktive Element umfasst.

Mithilfe des beanspruchten refraktiven Elements lässt sich nicht nur die Abbildungsgüte der Spektrometeranordnung verbessern. Es können auch andere Gerätecharakteristika verändert werden, die mit der Abbildungsgüte zusammenhängen. Eine Möglichkeit besteht in der Vergrößerung des Lichtleitwerts durch Vergrößerung des Öffnungsverhältnisses bei gleichbleibender Abbildungsgüte im Vergleich zum Ausgangsdesign. Es besteht weiter die Möglichkeit der Miniaturisierung des Spektrometers durch Verkleinerung der Brennweite bei Vergrößerung des Öffnungsverhältnisses unter gleichzeitiger Beibehaltung des spektralen Auflösungsvermögens. Weil über ein größeres Bildfeld akzeptable Aberrationswerte erreicht werden, können unter Umständen größere Detektoren zum Einsatz gelangen, um so den simultan erfassten Wellenlängenbereich zu erweitern.

Dies wird anhand der nachfolgenden Figuren näherer erläutert.
Fig. 1 zeigt eine Ausgestaltung der beanspruchten Spektrometeranordnung.
Fig. 2 zeigt Aberrationen gemessen mit einer unkorrigierten Spektrometeranordnung.
Fig. 3 zeigt Aberrationen gemessen mit einer Anordnung aus Fig. 1.
Fig. 4 zeigt einen einzelnen Spot aus Fig. 2.
Fig. 5 zeigt einen einzelnen Spot aus Fig. 3.

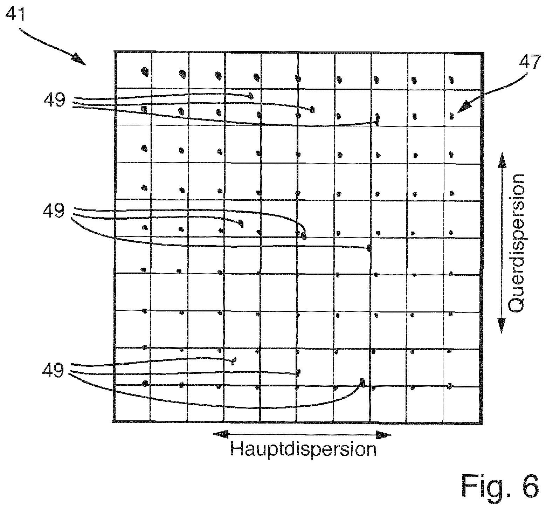

Fig. 6 zeigt Aberrationen gemessen mit einer Anordnung aus Fig. 1 mit zusätzlichen Wellenlängen.

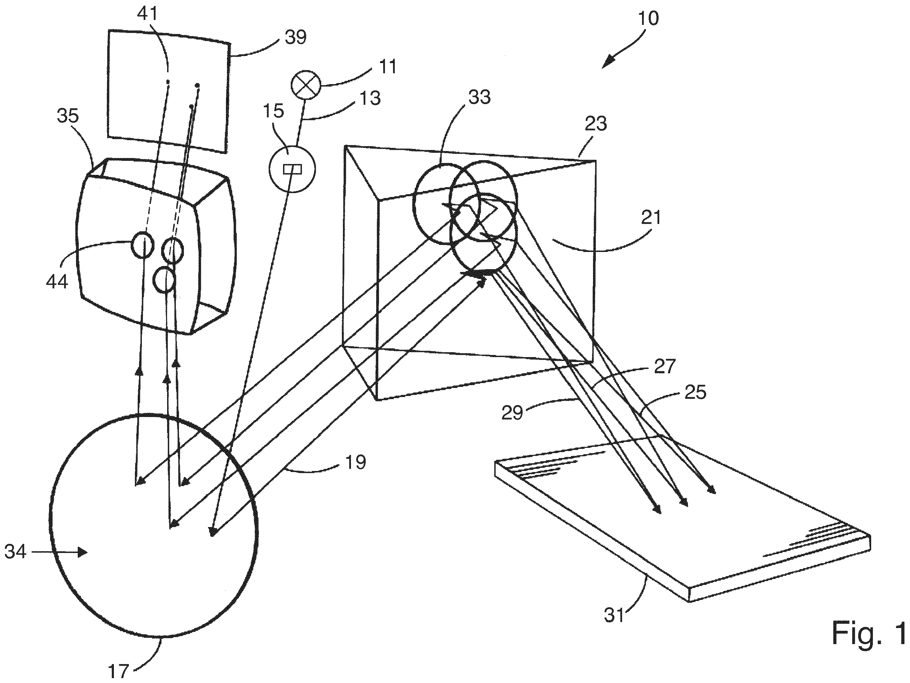

Fig. 1 zeigt eine Ausgestaltung der beanspruchten Spektrometeranordnung, welche mit dem Bezugszeichen 10 gekennzeichnet ist. Die Strahlung einer Strahlungsquelle 11 wird gebündelt 13 auf den Eintrittsspalt 15 eines Spektrometeranordnung 10 geführt, von wo sie in das eigentliche Spektrometer eintritt. Beispiele einer solchen Lichtquelle 11 ist eine Plasmafackel, wie sie in der ICP-OES (englisch: "inductively coupled plasma optical emission spectrometry", also "optische Emissionsspektrometrie mittels induktiv gekoppelten Plasmas") zum Einsatz kommt. In diesem Fall werden mit dem System Wellenlängen zwischen 165 nm und 900 nm erfasst.

Das in das Spektrometer eintretende Licht umfasst Strahlung sämtlicher Wellenlängen, welche die Lichtquelle emittiert. Durch eine Kollimationsoptik 17, z.B. ein Hohlspiegel, werden die Lichtbündel parallelisiert 19. Das kollimierte Licht trifft nachfolgend auf ein - im Wortlaut der vorliegenden Anmeldung - zweites dispergierendes Element, insbesondere ein Prisma 21, welches als optische Ordnungstrennungseinheit fungiert. Die Rückseite 23 des Prismas 21 ist verspiegelt.

Die vom Prisma vordispergierte Strahlung, hier beispielhaft dargestellt anhand der Wellenlängen λ₁, λ₂ und λ₃ mit den Bezugszeichen 25, 27 und 29, gelangt vom Prisma 21 zum Hauptdispersionselement, einem Echelle-Gitter 31. Die Strahlung wird vom Echelle-Gitter in eine Vielzahl von Beugungsordnungen mit hohen Ordnungszahlen gebeugt. Die Ordnungen sind am Gitter 31 räumlich unter Umständen noch stark überlagert. In der hier dargestellten Littrow-Anordnung gelangen die Bündel vom Gitter ein weiteres Mal zum rückverspiegelten Prisma 21, 23, wo die verschiedenen Wellenlängen 25, 27, 29 noch einmal quer zur Hauptdispersionsrichtung dispergiert werden. An der Rückseite des Prismas sind die Bündel der verschiedenen Beispielwellenlängen λ₁, λ₂ und λ₃ (25, 27, 29) aufgrund der großen Bündeldurchmesser beträchtlich überlagert, siehe Bezugszeichen 33. Die relative Bündelüberlappung ist also groß.

Vom Prisma 21 werden die Strahlen zurück zum Hohlspiegel 17 geführt, welcher die Abbildung der Bündel auf den Detektor 39 vornimmt. Dargestellt ist die Spektrometeranordnung in einer Littrow-Anordnung, d.h. der Hohlspiegel 17 ist ebenfalls auch als Kameraoptik 34 ausgestaltet.

Der Detektor 39 ist etwa ein CCD-Detektor als Flächendetektor (2-D Detektor). Der Detektor hat beispielsweise eine Auflösung von 1000x1000. Der Detektor 39 wird so ausgerichtet, dass die einzelnen Spalten ungefähr gleich ausgerichtet sind wie Beugungsordnungen. Der gesamte Detektor 39 wird gleichzeitig ausgelesen.

Auf dem Weg zum Detektor 39 passieren die sich zunehmend verengenden Bündel (aufgrund der Kameraoptik 34) ein refraktives Element 35. Das refraktive Element 35 ist hier als Linsenkörper ausgestaltet. Die beiden optisch wirksamen Flächen des bikonvexen Linsenkörpers sind sphärisch ausgebildet. Um vom Linsenkörper 35 induzierte Farbfehler möglichst klein zu halten, wird als Linsenkörpermaterial CaF₂ verwendet. Weiter sind die optisch wirksam Flächen des Linsenkörpers 35 mit einer Verspiegelung versehen, um das Falschlichtaufkommen am Detektor 39 weitestgehend einzugrenzen. An der Korrekturlinse 35 sind die Bündeldurchmesser schon so klein, dass sich für die hier dargestellten Beispielwellenlängen eine vollständige Bündeltrennung ergibt, siehe Bezugszeichen 44. Die relative Bündelüberlappung ist also klein.

Im Allgemeinen bildet das refraktive Element 35 einen außeraxialen Ausschnitt eines rotationssymmetrischen refraktiven Elements.

Die korrigierten Bündel der Wellenlängen λ₁, λ₂ und λ₃ (Bezugszeichen 25, 27, 29) werden weiter auf die Detektoreinheit 39 geführt. Durch die Korrektur des prismatischen Linsenkörpers 35 lassen sich auf dem Detektor sehr scharfe Bildpunkte in der Bildebene 41 erzeugen. Die Position des Korrektur-Linsenkörpers 35 in unmittelbarer Nähe zum Detektor 39 ist aufgrund der guten Bündeltrennung für die Erhöhung der Abbildungsgüte in besonderem Maße geeignet. Aufgrund der Bündeltrennung sind die einzelnen Bündel stark individuell korrigierbar, um vorher entstandene Aberrationen zu minimieren. Auch lässt der sich zunehmend verengende Durchmesser der Bündelschar eine kleine Dimensionierung des Korrekturelementes zu. Aufgrund der bikonvexen Ausgestaltung des Linsenkörpers ergibt sich im hier vorgestellten Beispiel eine Verringerung der Ausmaße des abgebildeten Spektrums auf dem Detektor. Dadurch wird - bei gleichbleibender Detektor- und Pixelgröße - der simultan erfassbare Wellenlängenbereich unter Umständen vergrößert, jedoch verringert sich das spektrale Auflösungsvermögen geringfügig. Durch die verringerten optischen Abbildungsfehler wird aber insgesamt ein deutlich besseres spektrales Auflösungsvermögen erreicht.

Anstelle des Echelle-Gitters als Hauptdispersionselement 31 kann ein senkrecht zur Spektrometerebene stehender Spiegel eingesetzt werden. Es ergibt sich ein reiner Prismenspektrograph, welcher in ähnlichem Maße von der oben beschriebenen Aberrationskorrektur des prismatischen Linsenkörpers profitiert. Aufgrund der stark reduzierten Aberrationen ist der Einsatz von Spalten mit großer Spalthöhe möglich. Die Spaltausrichtung ändert sich im Vergleich zum einem Echelle-Spektrometer um 90° und damit eine starke Verbesserung des geometrischen Lichtleitwertes des Spektrometers.

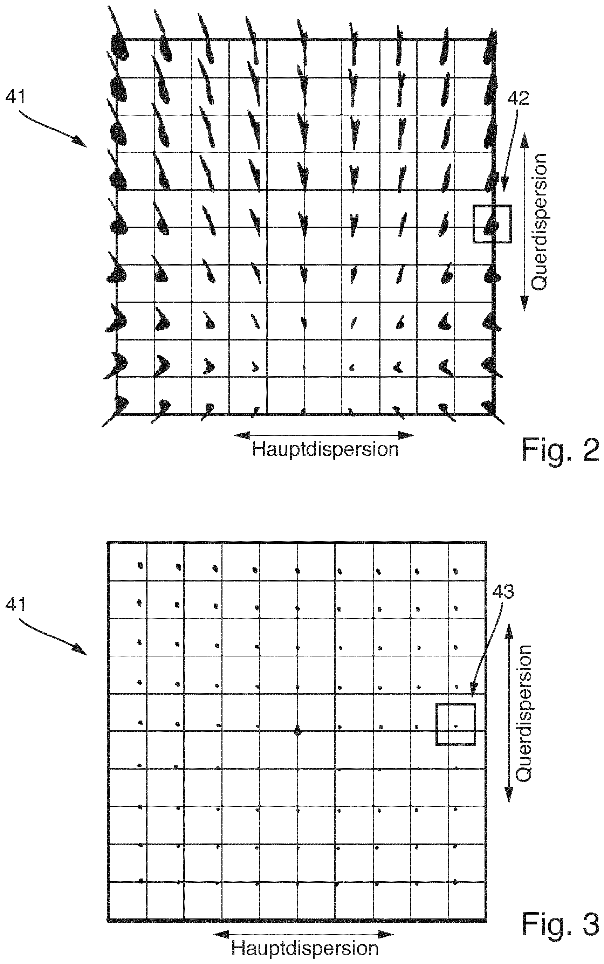

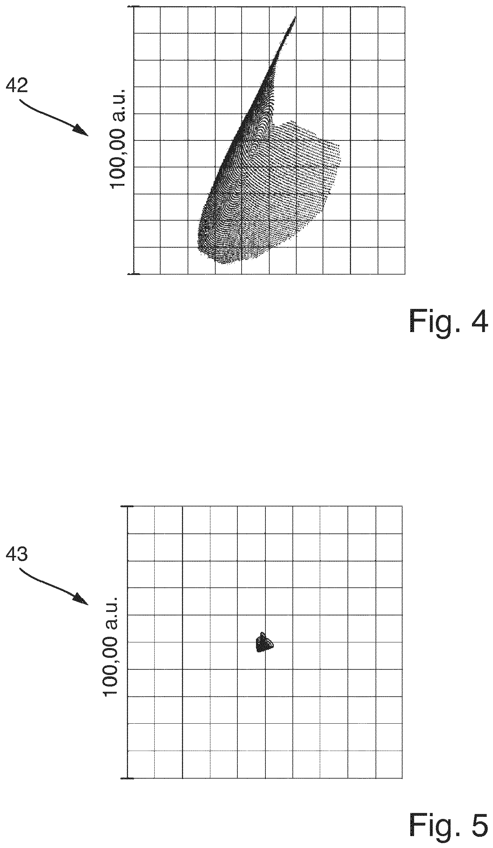

Fig. 2 zeigt die Aberrationen für eine unkorrigierte Spektrometeranordnung. Fig. 4 zeigt einen entsprechenden Einzelspot 42.

Fig. 3 zeigt die erreichbare Abbildungsgüte über das gesamte Bildfeld 41 mit einer Spektrometeranordnung 10 wie oben beschrieben mit Korrekturoptik 35. Bei der optischen Anordnung handelt es sich um einen Littrow-Spektrographen mit einer Brennweite von 400 mm und einem Öffnungsverhältnis von f/12.5. Als Kollimator/Kamera wird ein Off-Axis-Paraboloidspiegel eingesetzt. Beim Gitter handelt es sich um ein R4-Echelle-Gitter. Durch den Detektor mit einer Fläche von 20,5 x 20,5 mm² wird in den gezeigten Strahlrechnungssimulationen ein Wellenlängenbereich zwischen 380 nm (obere Detektorkante) und 900 nm (untere Detektorkante) simultan erfasst. Die gezeigten Spots stellen die Bilder eines einzelnen Quellpunktes für verschiedene Wellenlängen dar. Die Bildpunkte sind im Maßstab gegenüber der Detektorfläche um den Faktor 15 vergrößert. Für oben genannten Wellenlängenbereich wurde das optische System - insbesondere die Ausgestaltung der prismatischen Linse 35 - optimiert. Die Aberrationen können mit der Korrekturlinse 35 über das ganze Bildfeld um ein Vielfaches reduziert werden. Im Vergleich zum unkorrigierten System nimmt der gleiche Spektralbereich in Haupt- und Querdispersionsrichtung weniger Platz ein. Eingerahmt ist der in Fig. 3 vergrößert dargestellt Einzelspot.

In Fig. 5 wird die Abbildungsgüte für einen Einzelspot 43 dargestellt, welcher über eine prismatische Korrekturlinse 35 verfügt, entsprechend der in Fig. 1 dargestellten Aufstellung. Die Parameter der Korrekturlinse wie etwa Position, Ausrichtung, Krümmungsradien und Off-Axis-Distanzwurden so bestimmt, dass die Spotgrößen über das ganze Bildfeld möglichst stark vermindert werden können. Die Ausdehnung der Spots kann über das ganze Bildfeld massiv reduziert werden. Die Leistung des Systems wird nun für einen Großteil des abgedeckten Wellenlängenbereichs durch die Beugung begrenzt.

Wie erwähnt erfolgte die Auslegung der Korrekturlinse 35 für einen Wellenlängenbereich zwischen 380 nm und 900 nm. Bei Echelle-Spektrometern mit einem Prisma als Querdispersionselement lohnt sich die Optimierung für langwellige Bereiche aufgrund der mit zunehmender Wellenlänge immer enger zusammenliegenden Beugungsordnungen: Um eine Trennung der Beugungsordnungen bei möglichst großer Spalthöhe am Eintrittsspalt 15 zu erzielen, ist eine möglichst gute Abbildungsgüte in diesem Wellenlängenbereich anzustreben. Durch eine Drehung des Prismas 21 können nun aber auch andere, insbesondere kurzwelligere Wellenlängenbereiche auf den Detektor 39 geführt werden. Fig. 4 zeigt, dass die von dem refraktiven Element 35 induzierten Farbfehler vergleichsweise gering sind. Dargestellt sind neben ausgewählten Wellenlängen des langewelligen Bereichs (rot; Bezugszeichen 47) auch entsprechende Punkte, dargestellt sind 9 Punkte, im kurzwelligen Bereich (blau; Bezugszeichen 49) in einem Wellenlängenbereich zwischen 165 nm und 171 nm. Die Aberrationen sind aber ebenfalls deutlich kleiner als im unkorrigierten Zustand. Aufgrund der geringeren Breite des freien Spektralbereichs der Beugungsordnungen für kurzwelligeres Licht befinden sich die Spots in der Hauptdispersionsrichtung nur in der Mitte des Detektors. Weiter links oder rechts liegende Detektorbereiche bleiben im kurzwelligen Messbereich ungenutzt.

### Bezugszeichenliste

- 10: Spektrometeranordnung
- 11: Strahlungsquelle
- 13: gebündelter Strahl von 11
- 15: Eintrittsspalt
- 17: Kollimationsoptik
- 19: paralleles Licht im Strahlenverlauf nach 17
- 21: zweites dispergierendes Element, insbesondere Prisma
- 23: Rückseite von 21
- 25: 1. Wellenlänge
- 27: 2. Wellenlänge
- 29: 3. Wellenlänge
- 31: erstes dispergierendes Element, insbesondere Echelle-Gitter
- 33: Überlappung der Bündel von 25, 27, 29 an 23 nach Durchgang durch 31
- 34: Kameraoptik
- 35: refraktives Element
- 39: Detektor
- 41: Bildebene auf 39
- 42: Einzelspot unkorrigiert
- 43: Einzelspot korrigiert
- 44: Überlappung der Bündel von 25, 27, 29 an 35
- 47: langwelliger Bereich
- 49: kurzwelliger Beriech

## Patentansprüche

1. Spektrometeranordnung (10), umfassend
- ein erstes dispergierendes Element (31) zur spektralen Zerlegung von Strahlung in einer Hauptdispersionsrichtung,
- ein zweites dispergierendes Element (21) zur spektralen Zerlegung von Strahlung in einer Querdispersionsrichtung, welche einen Winkel zur Hauptdispersionsrichtung bildet, sodass ein zweidimensionales Spektrum erzeugbar ist,
- eine Kollimationsoptik (17), welche die Strahlung kollimiert zum ersten und/oder zweiten dispergierenden Element (31, 21) führt,
- eine Kameraoptik (34), welche das Spektrum in eine Bildebene (41) abbildet,
- ein zweidimensionaler Detektor (39) zur Detektion des zweidimensionalen Spektrums in der Bildebene (41), und
- ein außeraxialer Ausschnitt eines rotationssymmetrischen refraktiven Elements (35), das zwischen Kameraoptik (34) und Detektor (39) angeordnet ist.

2. Spektrometeranordnung (10) nach Anspruch 1,
wobei das refraktive Element (35) als bikonvexe Linse ausgestaltet ist.

3. Spektrometeranordnung (10) nach Anspruch 1 oder 2,
wobei das refraktive Element (35) als sphärische Linse ausgestaltet ist.

4. Spektrometeranordnung (10) nach zumindest einem der vorherigen Ansprüche,
wobei mindestens eine Linsenfläche asphärisch ausgestaltet wird.

5. Spektrometeranordnung (10) nach zumindest einem der vorherigen Ansprüche,
wobei das refraktive Element (35) eine Verspiegelung umfasst.

6. Spektrometeranordnung (10) nach zumindest einem der vorherigen Ansprüche,
wobei das refraktive Element (35) aus einem schwach dispergierenden Material, insbesondere Calciumfluorid gefertigt ist.

7. Spektrometeranordnung (10) nach zumindest einem der vorherigen Ansprüche, wobei die Kollimationsoptik (17) und/oder die Kameraoptik (34) einen Hohlspiegel, insbesondere einen Parabolspiegel oder einen sphärischen Spiegel, umfasst.

8. Spektrometeranordnung (10) nach zumindest einem der vorherigen Ansprüche,
wobei das erste dispergierende (31) Element als Echellegitter ausgestaltet ist.

9. Spektrometeranordnung (10) nach zumindest einem der Ansprüche 1 bis 7, wobei das erste dispergierende Element (31) mit einem senkrecht zur Bildebene des Detektors angeordnetem Spiegel ersetzt wird, und
wobei der zweidimensionale Detektor (39) durch einen eindimensionalen Detektor ersetzt wird.

10. Spektrometeranordnung (10) nach zumindest einem der vorherigen Ansprüche,
wobei das zweite dispergierende Element (21) als Prisma ausgestaltet ist.

11. Spektrometeranordnung (10) nach Anspruch 10,
wobei das Prisma rückseitenverspiegelt ist.

12. Spektrometeranordnung (10) nach Anspruch 10 oder 11,
wobei das Prisma drehbar gelagert ist.

13. Spektrometeranordnung (10) nach zumindest einem der vorherigen Ansprüche,
wobei die Spektrometeranordnung (10) ein Littrow-Spektrometer bildet.

14. Optische Bauteilegruppe zum Nachrüsten einer Spektrometeranordnung (10) nach zumindest einem der vorherigen Ansprüche, wobei die Bauteilegruppe zumindest das refraktive Element (35) umfasst.
